(19) Europäisches Patentamt

European Patent Office

Office européen des brevets

(11) **EP 1 270 940 A2**

(12) **EUROPEAN PATENT APPLICATION**

(43) Date of publication:
02.01.2003 Bulletin 2003/01

(51) Int Cl.[7]: **F04B 27/08**, F16F 15/12

(21) Application number: 02014345.9

(22) Date of filing: 27.06.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 28.06.2001 JP 2001196632
03.08.2001 JP 2001236449

(71) Applicant: **Kabushiki Kaisha Toyota Jidoshokki**
**Kariya-shi, Aichi-ken (JP)**

(72) Inventors:
• **Kanai, Akinobu**
**Kariya-shi, Aichi-ken (JP)**
• **Kawaguchi, Masahiro**
**Kariya-shi, Aichi-ken (JP)**
• **Ota, Masaki**
**Kariya-shi, Aichi-ken (JP)**
• **Adaniya, Taku**
**Kariya-shi, Aichi-ken (JP)**
• **Kawata, Takeshi**
**Kariya-shi, Aichi-ken (JP)**
• **Suzuki, Takahiro**
**Kariya-shi, Aichi-ken (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Drive pulley for compressor**

(57) A torque receiving member (42) is fixed to a rotary shaft (16) of a compressor. A pulley (17), which is rotated by an external drive source (E), is rotatably supported by a housing (11, 12, 13, 14) of the compressor. The pulley (17) is substantially coaxial with the torque receiving member (42). A rubber damper (43) is located between the pulley (17) and the torque receiving member (42). The rubber damper (43) absorbs rotational vibration transmitted from the torque receiving member (42) to the pulley (17). The pulley (17) has a dynamic damper. The dynamic damper includes rollers (46), which swing like pendulums to reduce rotational vibration of the pulley (17). Stress produced due to displacement between the axis of the pulley (17) and the torque receiving member (42) is reduced by the rubber damper (43).

**Fig.1**

EP 1 270 940 A2

## Description

BACKGROUND OF THE INVENTION

The present invention relates to a rotary machine that includes a housing, a rotary shaft, which is rotatably supported by the housing, a first rotor, which is fixed to the rotary shaft, and a second rotor, which is rotatably supported by the housing. Specifically, the present invention pertains to a rotary machine that includes a first and second rotors, which are substantially coaxial and coupled to each other.

For example, a typical vehicular compressor driven by an external drive source such as a vehicle engine has a first rotor, which is fixed to a rotary shaft for driving the compressor, and a second rotor, which is coupled to the first rotor and to the engine by a belt. Typically, the second rotor is rotatably supported by the housing of the compressor with a bearing. This structure reduces radial stress applied to the rotary shaft due to the tension of the belt. Accordingly, the stress received by the bearing supporting the rotary shaft is reduced.

Japanese Laid-Open Patent Publication No. 2000-297844 discloses such a structure. The structure of the publication includes an inertial weight (second rotor) driven by an external drive source and a hub (first rotor) fixed to a crankshaft (rotary shaft). The inertial weight is coupled to the hub with an annular elastomer (damping member).

The annular elastomer attenuates the rotational vibration transmitted from the crankshaft to the inertial weight. Further, the hub has a variable frequency vibration absorbing system. The system includes centrifugal weights, which swing like pendulums to reduce rotational vibration of the crankshaft. Accordingly, the resonance between the first rotor and the second rotor is suppressed.

If the first rotor is fixed to a rotary shaft and the second rotor is rotatably supported by a housing, which supports the rotary shaft, the displacement between the axes of the first and second rotors needs to be absorbed (allowed). If there is no structure for absorbing the axial displacement, the durability of bearings supporting the rotary shaft and the durability of bearings supporting the second rotor are degraded. The structure of the publication No. 2000-297844 does not absorb such axial displacement.

SUMMARY OF THE INVENTION

Accordingly, it is an objective of the present invention to provide a rotary machine that suppresses resonance between a first rotor and a second rotor and improves the durability of the rotary machine.

To achieve the foregoing and other objectives and in accordance with the purpose of the present invention, a rotary machine driven by an external drive source is provided. The rotary machine includes a housing, a rotary shaft, a first rotor, a second rotor, a coupling member, and a dynamic damper. The rotary shaft is rotatably supported by the housing. The first rotor is fixed to the rotary shaft to rotate integrally with the rotary shaft. The second rotor is rotatably supported by the housing. The second rotor is substantially coaxial with the first rotor and is rotated by the external drive source. The coupling member couples the rotors to each other to transmit power from the second rotor to the first rotor. The coupling member includes a damping member. The dynamic damper is provided in at least one of the rotors. The dynamic damper has a weight that swings like a pendulum. The axis of the pendulum motion of the weight is separated by a predetermined distance from and is substantially parallel to the rotation axis of the corresponding rotor.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a cross-sectional view illustrating a compressor having a power transmission mechanism according to a first embodiment of the present invention;
Fig. 2(a) is a front view illustrating the power transmission mechanism of the compressor shown in Fig. 1;
Fig. 2(b) is a cross-sectional view taken along line 2(b)-2(b) of Fig. 2(a) ;
Fig. 3(a) is a front view illustrating a power transmission mechanism according to a second embodiment; Fig. 3(b) is a cross-sectional view taken along line 3(b)-3(b) of Fig. 3(a) ;
Fig. 4(a) is a front view illustrating a power transmission mechanism according to a second embodiment; Fig. 4(b) is a cross-sectional view taken along line 4(b)-4(b) of Fig. 4(a) ;
Fig. 5 is a front view illustrating a power transmission mechanism according to another embodiment;
Fig. 6 is a front view illustrating a power transmission mechanism according to another embodiment (the hub is omitted for purposes of illustration); and
Fig. 7 is a front view illustrating a power transmission mechanism according to another embodiment (the hub is omitted for purposes of illustration).

DETAILED DESCRIPTION OF THE PREFERRED EMBODIMENTS

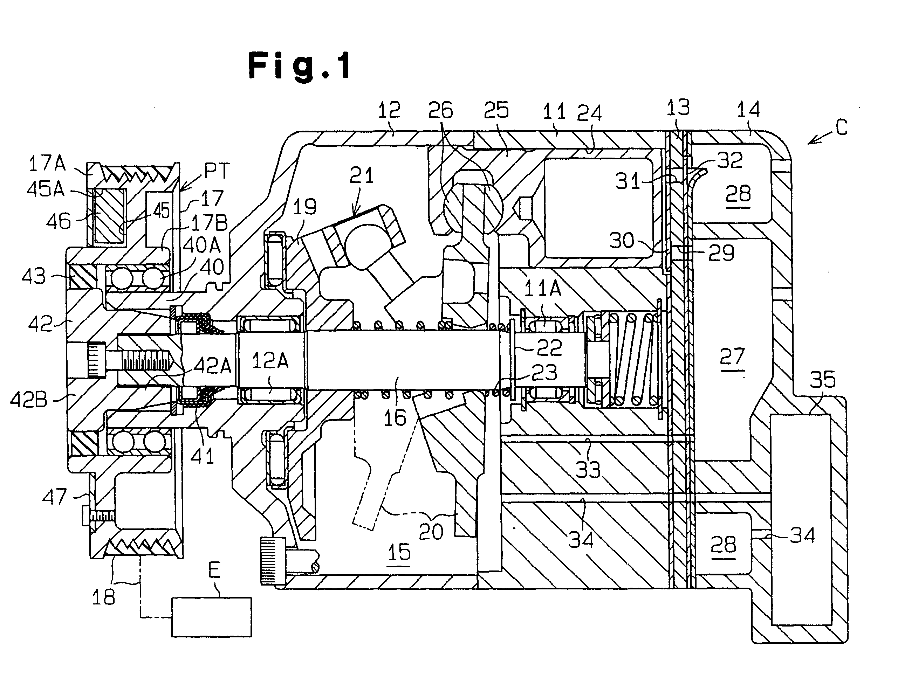

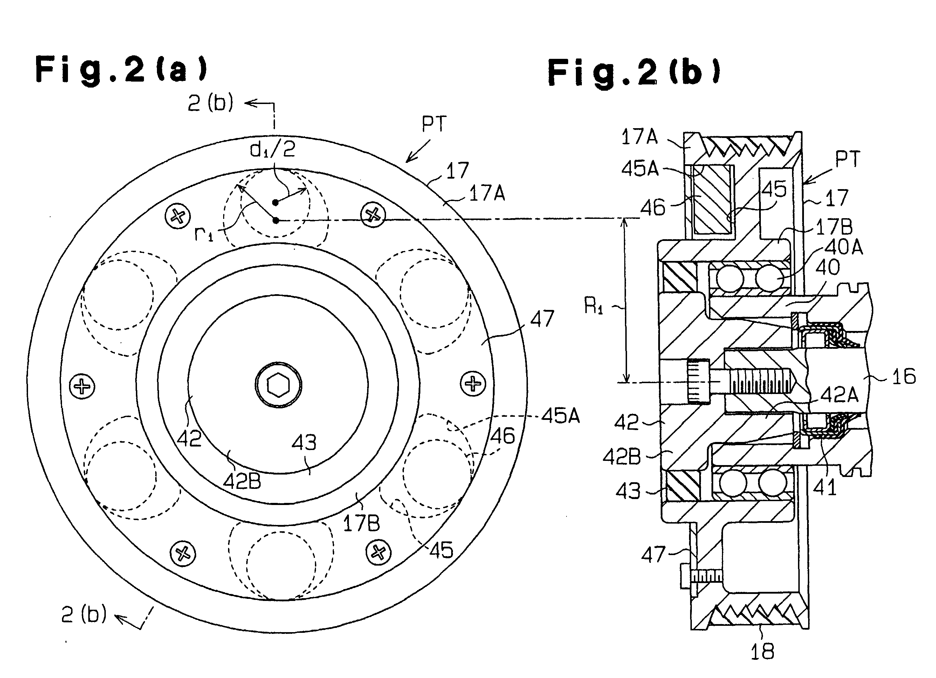

A compressor C according to one embodiment of the present invention will now be described with reference to Figs. 1 to 2(b). The left end of the compressor C in Fig. 1 is defined as the front of the compressor, and the right end is defined as the rear of the compressor C.

The compressor C forms a part of a vehicular air conditioner. As shown in Fig. 1, the compressor C includes a cylinder block 11, a front housing member 12, a valve plate assembly 13, and a rear housing member 14. The front housing member 12 is secured to the front end of the cylinder block 11. The rear housing member 14 is secured to the rear end of the cylinder block 11 with the valve plate assembly 13 in between. The cylinder block 11, the front housing 12, the valve plate assembly 13, and the rear housing member 14 form the housing of the compressor C.

The cylinder block 11 and the front housing member 12 define a crank chamber 15 in between.

A rotary shaft, which is a drive shaft 16 in this embodiment, is housed in the compressor housing and extends through the crank chamber 15. The front portion of the drive shaft 16 is supported by a radial bearing 12A located in the front wall of the front housing member 12. The rear portion of the drive shaft 16 is supported by a radial bearing 11A located in the cylinder block 11.

A cylindrical support 40 is formed at the front end of the front housing member 12. The front end portion of the drive shaft 16 extends through the front wall of the front housing member 12 and is located in the cylindrical support 40. A power transmission mechanism PT is fixed to the front end of the drive shaft 16. The power transmission mechanism PT includes a pulley 17. The front end of the drive shaft 16 is coupled to an external drive source, which is a vehicular engine E in this embodiment, by the power transmission mechanism PT and a belt 18, which is engaged with the pulley 17. The power transmission mechanism PT and the compressor form a rotary machine.

A lug plate 19 is coupled to the drive shaft 16 and is located in the crank chamber 15. The lug plate 19 rotates integrally with the drive shaft 16. A cam plate, which is a swash plate 20 in this embodiment, is housed in the crank chamber 15. The swash plate 20 slides along and inclines with respect to the drive shaft 16. The swash plate 20 is coupled to the lug plate 19 by the hinge mechanism 21. The lug plate 19 permits the swash plate 20 to rotate integrally with the drive shaft 16 and to incline with respect to the drive shaft 16 while sliding along the rotation axis of the drive shaft 16.

A snap ring 22 is fitted about the drive shaft 16. A spring 23 extends between the snap ring 22 and the swash plate 20. The snap ring 22 and the spring 23 limit the minimum inclination angle of the swash plate 20. At the minimum inclination angle of the swash plate 20, the angle defined by the swash plate 20 and the axis of the drive shaft 16 is closest to ninety degrees.

Cylinder bores 24 (only one is shown in Fig. 1) are formed in the cylinder block 11. The cylinder bores 24 are located about the rotation axis of the drive shaft 16. A single-headed piston 25 is reciprocally housed in each cylinder bore 24. The front and rear openings of each cylinder bore 24 are closed by the associated piston 25 and the valve plate assembly 13. A compression chamber is defined in each cylinder bore 24. The volume of the compression chamber changes according to the reciprocation of the corresponding piston 24. Each piston 25 is coupled to the peripheral portion of the swash plate 20 by a pair of shoes 26. When the swash plate 20 is rotated by rotation of the drive shaft 16, the shoes 26 converts the rotation into reciprocation of each piston 25.

The cylinder block 11 (cylinder bores 24), the drive shaft 16, the lug plate 19, the swash plate 20, the hinge mechanism 21, the pistons 25, and the shoes 26 form a piston type variable displacement compression mechanism.

Sets of suction ports 29 and suction valve flaps 30 and sets of discharge ports 31 and discharge valve flaps 32 are formed in the valve plate assembly 13. Each set of the suction port 29 and the corresponding suction valve flap 30 and each set of the discharge port 31 and the corresponding discharge valve flap 32 correspond to one of the cylinder bores 24 (compression chambers).

A suction chamber 27 and a discharge chamber 28 are defined in the rear housing member 14. The front ends of the suction chamber 27 and the discharge chamber 28 are closed by the valve plate assembly 13. As each piston 25 moves from the top dead center position to the bottom dead center position, refrigerant gas is drawn into the corresponding cylinder bore 24 (compression chamber) through the corresponding suction port 29 while flexing the suction valve flap 30 to an open position. Low pressure refrigerant gas that is drawn into the cylinder bore 24 is compressed to a predetermined pressure as the piston 25 is moved from the bottom dead center position to the top dead center position. Then, the gas is discharged to the discharge chamber 28 through the corresponding discharge port 31 while flexing the discharge valve flap 32 to an open position.

The suction chamber 27 is connected to the discharge chamber 28 by an external refrigerant circuit (not shown). Refrigerant that is discharged from the discharge chamber 28 flows into the external refrigerant circuit. The external refrigerant circuit performs heat exchange using the refrigerant. The refrigerant is drawn into the suction chamber 27 from the external refrigerant circuit. Then, the refrigerant is drawn into each cylinder bore 24 to be compressed again.

A bleed passage 33 is formed in the housing to connect the crank chamber 15 with the suction chamber 27. A supply passage 34 is formed in the housing to connect the discharge chamber 28 with the crank chamber 15. A control valve 35 is located in the supply passage 34 to regulate the opening degree of the supply passage 34.

The opening of the control valve 35 is adjusted to control the flow rate of highly pressurized gas supplied to the crank chamber 15 through the supply passage 34. The pressure in the crank chamber 15 (crank chamber pressure Pc) is determined by the ratio of the gas supplied to the crank chamber 15 through the supply passage 34 and the flow rate of refrigerant gas conducted out from the crank chamber 15 through the bleed passage 33. As the crank chamber pressure Pc varies, the difference between the crank chamber pressure Pc and the pressure in the compression chambers varies, which changes the inclination angle of the swash plate 20. Accordingly, the stroke of each piston 25, or the compressor displacement during one rotation of the drive shaft 16, is varied.

As shown in Figs. 1 to 2(b), the cylindrical support 40 protrudes from the front wall of the front housing member 12 and surrounds the front portion of the drive shaft 16. The axis of the circumference of the support cylinder 40 substantially coincides with the axis of the drive shaft 16.

A lip seal 41 is located in the support cylinder 40 to fill the space between the support cylinder 40 and the drive shaft 16. The lip seal 41 prevents refrigerant from escaping the crank chamber 15 through the space between the support cylinder 40 and the drive shaft 16.

A first rotor, which is a torque receiving member 42 in this embodiment, is secured to the front end of the drive shaft 16 to rotate integrally with the drive shaft 16. The torque receiving portion 42 includes a boss 42A and a circular hub 42B. The boss 42A is fitted in the support cylinder 40 and is located forward of the lip seal 41. The hub 42B is integrally formed with the boss 42A and is located forward of the support cylinder 40.

A second rotor, which is the pulley 17 in this embodiment, has a belt receiving portion 17A, about which the belt 18 is wound. The belt 18 transmits power (torque) of the output shaft of the engine E to the pulley 17. The pulley 17 also has an inner cylinder 17B. A radial bearing 40A is fitted about the support cylinder 40. The outer ring of the radial bearing 40A is secured to the inner surface of the pulley inner cylinder 17B. That is, the pulley 17 is rotatably supported by the housing. Also, the pulley 17 rotates relative to the drive shaft 16 and the torque receiving member 42 with the rotation axis of the pulley 17 is coaxial with those of the drive shaft 16 and the torque receiving member 42.

The inner surface of the inner cylinder 17B and the outer surface of the hub 42B are connected to each other by an annular elastic member (damping member), which is a rubber damper 43 in this embodiment. The rubber damper 43 is located in the power transmission path between the pulley 17 and the torque receiving member 42. The rubber damper 43 functions as a coupling member for coupling the pulley 17 and the torque receiving member 42 to each other. The rubber damper 43 is elastically deformed to allow the pulley 17 to move circumferentially and radially relative to the torque receiving member 42.

Six weight receptacles 45 (only one is shown in Fig. 1) are formed in the pulley 17 between the belt receiving portion 17A and the inner cylinder 17B. The receptacles 45 function as receiving portions. The weight receptacles 45 are angularly spaced at the constant intervals.

Each weight receptacle 45 has a weight guiding surface 45A. The cross-section of each of the guiding surfaces 45A is arcuate along a plane perpendicular to the rotation axis of the pulley 17. Each weight guiding surface 45A forms a part of an imaginary cylinder, the axis of which is parallel to the rotation axis of the pulley 17. The radius of the imaginary cylinder is represented by $r_1$, and the axis of the imaginary cylinder is spaced from the rotation axis of the pulley 17 by a distance $R_1$.

A weight, which is a rigid roller 46 in this embodiment, is accommodated in each weight receptacle 45. The diameter and the weight of each roller 46 are referred to as $d_1$ and $m_1$, respectively. Each roller 46 rolls in the circumferential direction along the weight guiding surface 45A of the corresponding weight receptacle 45. An annular lid 47 is fixed to the front face of the pulley 17 by bolts. The lid 47 covers the weight receptacles 45 to prevent the rollers 46 from falling off the receptacles 45.

When the compressor C is being driven by the engine E, or when the drive shaft 16 is rotating, centrifugal force causes each roller 46 to contact the corresponding guiding surface 45A (see Figs. 1 to 2(b)). If torque fluctuation is generated due to, for example, torsional vibrations of the drive shaft 16, each roller 46 starts reciprocating along the guiding surface 45A of the corresponding receptacle 45. In other words, each roller 46 moves along the circumferential direction of the guiding surface 45A. That is, each roller 46, or the center of gravity of each roller 46, swings like a pendulum about the axis of an imaginary cylinder that includes the corresponding guiding surface 45A. That is, each roller 46 acts as a centrifugal pendulum when the compressor C is being driven by the engine E. The size and mass of the rollers 46 and the locations of the rollers 46 in the pulley 17 are determined such that the torque fluctuation is suppressed by pendulum motion of the rollers 46.

The pulley 17 (the weight receptacles 45) and the rollers 46 form a dynamic damper.

The settings of the rollers 46, which function as centrifugal pendulums, will now be described.

The rollers 46 suppress torque fluctuation when the frequency of the fluctuation is equal to the characteristic frequency of the roller 46 (centrifugal pendulum). Therefore, the location, the size, and the mass of the rollers 46 are determined such that the characteristic frequency of the rollers 46 is set equal to the frequency of a peak component of the torque fluctuation. Accordingly, the amplitude of the peak component is suppressed, and the influence of the torque fluctuation is effectively reduced. A peak of the torque fluctuation represents a peak of the fluctuation range, or a rotation order component.

The frequency of the torque fluctuation and the characteristic frequency of the rollers 46 are proportional to the angular velocity $\omega_1$ of the drive shaft 16, which corresponds to the speed of the drive shaft 16. The frequency of the torque fluctuation when its range is the greatest is represented by the product of the rotation speed of the drive shaft 16 per unit time $(\omega_1/2\pi)$ and the number N of the cylinder bores 24. That is, the frequency is represented by the formula $(\omega_1/2\pi) \cdot N$. Through experiments, it was confirmed that an nth greatest peak (n is a natural number) of the torque fluctuation has a value equal to a product $n \cdot (\omega_1/2\pi) \cdot N$.

The characteristic frequency of the rollers 46 is obtained by multiplying the rotation speed of the drive shaft 16 per unit time $(\omega_1/2\pi)$ with the square root of the ratio R/r. The sign R represents the distance between the rotation axis of the pulley 17 (a rotor having weights that swing like pendulums) and the axis of the pendulum motion of each roller 46 (weight). The sign r represents the distance between the center of the pendulum motion of each roller 46 and the center of gravity of the roller 46.

Therefore, by equalizing the square root of the ratio R/r with the product $n \cdot N$, the characteristic frequency of each roller 46 is equalized with the frequency of the nth greatest peak of the torque fluctuation. Accordingly, the torque fluctuation at the nth greatest peak is suppressed.

Accordingly, to suppress the greatest peak of the torque fluctuations, the value of the signs R and r are determined such that the square root of the ratio R/r is equal to N, or the value of the product $n \cdot N$ when n is one.

The torque produced about the rotation axis of the pulley 17 by the rollers 46 is represented by a sign T. To effectively reduce peaks of the torque fluctuation by the pendulum motion of the rollers 46, the torques T need to counter the torque fluctuation and the amplitudes of the torques T need to be equal to the amplitude of the peaks of the fluctuation. When the frequency of the peak of the torque fluctuations is equal to the characteristic frequency of the rollers 46, the torque T is represented by the following equation.

$$\text{(Equation 1)} \qquad T = m \cdot (\omega_a)^2 \cdot (R+r) \cdot R \cdot \varphi$$

In the equation 1, the sign m represents the total mass of the rollers 46 $(m=6m_1)$, and the sign $\omega_a$ represent the average angular velocity of the rollers 46 when the rollers 48 swing in a minute angle $\varphi$.

In this embodiment, the mass m is maximized to minimize the values R, r, and $\varphi$, so that the size of the pulley 17 is minimized, and the torque T is maximized.

The axis of each imaginary cylinder, which includes one of the guiding surfaces 45A, coincides with the axis, or the fulcrum, of the pendulum motion of the corresponding roller 46. That is, the distance $R_1$ between the rotation axis of the pulley 17 and the axis of each imaginary cylinder corresponds to the distance R.

The distance between the axis of the pendulum motion of each roller 46 and the center of gravity of the roller 46 is equal to the value obtained by subtracting the half of the diameter $d_1$ of the roller 46 from the radius $r_1$ of the corresponding imaginary cylinder. That is, the difference $(r_1-(d_1/2))$ corresponds to the distance r.

To suppress the greatest peak of the torque fluctuation, the values of the distances $R_1$, $r_1$, and the diameter $d_1$ are determined such that the square root of $R_1/(r_1-(d_1/2))$, which corresponds to the square root of the ratio R/r, is equal to N, or the value of the product $n \cdot N$ when n is one.

The settings are determined by regarding each roller 46 as a particle at the center of gravity.

The operation of the compressor C will now be described.

When the power of the engine E is supplied to the drive shaft 16 through the pulley 17, the swash plate 20 rotates integrally with the drive shaft 16. As the swash plate 20 rotates, each piston 25 reciprocates in the associated cylinder bore 24 by a stroke corresponding to the inclination angle of the swash plate 20. As a result, suction, compression and discharge of refrigerant gas are repeated in the cylinder bores 24.

If the opening degree of the control valve 35 is decreased, the flow rate of highly pressurized gas supplied to the crank chamber 15 from the discharge chamber 28 through the supply passage 34 is decreased. Accordingly, the crank chamber pressure Pc is lowered and the inclination angle of the swash plate 20 is increased. As a result, the displacement of the compressor C is increased. If the opening degree of the control valve 35 is increased, the flow rate of highly pressurized gas supplied to the crank chamber 15 from the discharge chamber 28 through the supply passage 34 is increased. Accordingly, the crank chamber pressure Pc is raised and the inclination angle of the swash plate 20 is decreased. As a result, the displacement of the compressor C is decreased.

During rotation of the drive shaft 16, the compression reaction force of refrigerant and reaction force of reciprocation of the pistons 25 are transmitted to the drive shaft 16 through the swash plate 20 and the hinge mechanism 21, which torsionally (rotationally) vibrates the drive shaft 16. The torsional vibrations generate torque fluctuation. The torque fluctuation causes the compressor C to resonate. The torque fluctuations also produce resonance between the compressor C and external devices (the engine E and auxiliary devices), which are connected to the pulley 17 by the belt 18.

When the torque fluctuations are generated, the rollers 46 start swinging like pendulums. The pendulum motion of the rollers 46 produces torques about the rotation axis of the pulley 17. The produced torques suppress the torque fluctuation. The characteristic frequency of the rollers 46 is equal to the frequency of the greatest peak of the torque fluctuations. Therefore, the peak of the torque fluctuations is suppressed, which effectively reduce the torque fluctuations of the pulley 17.

Further, since the pulley 17 is coupled to the drive shaft 16 (the torque receiving member 42) by the rubber damper 43, torque fluctuation transmitted from the torque receiving member 42 to the pulley 17 is attenuated. As a result, the resonance produced by the torque fluctuations is effectively suppressed.

The rotation axes of the pulley 17 and the torque receiving member 42 may be displaced from each other. However, since the rubber damper 43 is located between the pulley 17 and the torque receiving member 42 (the drive shaft 16), stress applied to the radial bearings 12A, 40A due to the displacement of the axes is reduced.

The rubber damper 43 functions effectively when the frequency of the torque fluctuation is relatively high. The rollers 46 function effectively when the frequency of the torque fluctuation is relatively low.

The present embodiment has the following advantages.

(1) The rollers 46 are provided in the pulley 17. Each roller 46 swings like a pendulum about its axis, which is spaced from the rotation axis of the pulley 17 by the predetermined distance $R_1$ and is parallel to the rotation axis of the pulley 17. The pendulum motion of the rollers 46 suppresses the torsional vibration (the torque fluctuation), which suppresses resonance produced in the power transmission mechanism PT and the compressor C. Further, the pendulum motion suppresses resonance produced between the compressor C and the external devices that are coupled to the pulley 17 by the belt 18.

The rubber damper 43 is located in the power transmission path between the pulley 17 and the torque receiving member 42. The rubber damper 43 is elastically deformed to allow the pulley 17 to move circumferentially relative to the torque receiving member 42, which attenuates the torque fluctuation transmitted from the torque receiving member 42 to the pulley 17. That is, in addition to the rollers 46, the rubber damper 43 functions as a damper. Therefore, the resonance is effectively suppressed.

Since the structure for suppressing resonance is provided in the power transmission mechanism PT, the drive shaft 16 need not have any means for suppressing resonance. This reduces the weight and the size of the compressor C.

(2) Radial stress is applied to the drive shaft 16 due to the tension of the belt 18 coupling the pulley 17 with the engine E. However, since the pulley 17 is supported by the housing, radial stress applied to the drive shaft 16 is reduced.

(3) The damper 43 is located between the pulley 17 and the torque receiving member 42, or in the power transmission path in between. The rotation axes of the pulley 17 and the torque receiving member 42 (the drive shaft 16) can be displaced from each other. However, since the rubber damper 43 is elastically deformed to allow the pulley 17 to move radially relative to the torque receiving member 42, deformation of the rubber damper 43 reduces stress applied to the radial bearings 12A, 40A due to the displacement of the axes. Therefore, the durability of the rotary machine, which includes the power transmission mechanism PT and the compressor C, is improved.

(4) The rollers 46, which are rigid cylinders, move along the arcuate weight guiding surface 45A formed in the weight receptacles 45 of the pulley 17. Since the rollers 46 are not fixed to the fulcrum of the pendulum motion, the structure is simplified compared to a structure in which weights are fixed to the fulcrums. In a structure in which the weights are fixed to the fulcrums, the distance between each weight and the corresponding pendulum axis (fulcrum) varies due to space created between the fulcrum and the hole formed in the weight for receiving the fulcrum. The structure of the above embodiment has no such drawback. Therefore, the resonance is effectively suppressed.

A second embodiment of the present invention will now be described. The second embodiment is the same as the first embodiment except for the structure of the power transmission mechanism PT. Mainly, the differences from the first embodiment will be discussed below, and same or like reference numerals are given to parts that are the same as or like corresponding parts of the first embodiment.

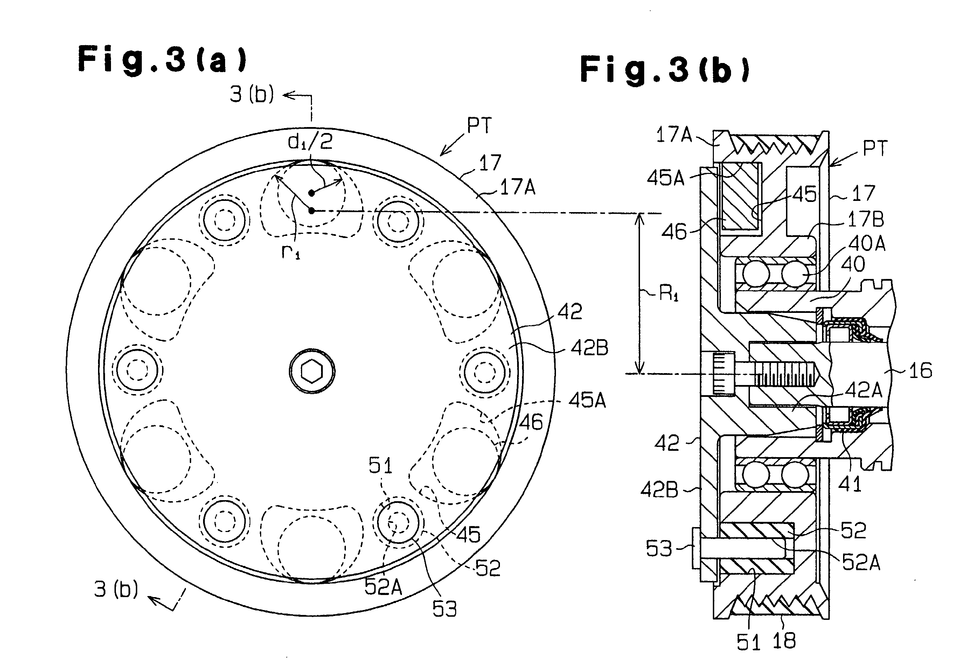

As shown in Figs. 3(a) and 3(b), a torque receiving member 42 of the second embodiment has a hub 42B. Compared to the first embodiment, the hub 42B has a greater diameter and substantially covers the entire opening of each receptacle 45. In the second embodiment, the lid 47 of the first embodiment is omitted. Instead, the hub 42B prevents the rollers 46 from falling off the receptacles 45.

In the second embodiment, the rubber damper 43, which is located between the outer surface of the hub 42B and the inner surface of the inner cylinder 17B of the first embodiment, is omitted.

A damper receptacle 51 is formed between each adjacent pair of the weight receptacles 45. The front end of each damper receptacle 51 is open. That is, the pulley 17 has the six damper receptacles 51.

A tubular elastic member (damping member), which is a rubber damper 52, is fitted in each damper receptacle 51. The rubber dampers 52 have circular cross-sections. The outer surface of each rubber damper 52 closely contacts the inner surface of the corresponding damper recess 51.

Each rubber damper 52 has a through hole 52A, the cross-section of which is circular. The hub 42B has power transmission pins 53 projecting rearward. Each pin 53 corresponds to one of the rubber dampers 52. The rear end (right end as viewed in the drawings) of each pin 53 is fitted in the through hole 52A of the corresponding damper 52. Each pin 53 is press fitted in a hole formed in the peripheral portion of the hub 42B, and extends in the axial direction of the torque receiving member 42. The number of the pins 53 is six in this embodiment.

Power transmitted from the engine E to the pulley 17 is transmitted to the torque receiving member 42 through the rubber dampers 52 and the power transmission pins 53. The rubber dampers 52 and the power transmission pins 53 are located in the power transmission path between the pulley 17 and the torque receiving member 42. The rubber dampers 52 attenuate the torque fluctuation transmitted from the torque receiving member 42 to the pulley 17.

In addition to the advantages (1) to (4), the second embodiment has the following advantages.

(5) Each rubber damper 52 is located between one of the adjacent pairs of the weight receptacles 45. The spaces between the receptacles 45 are effectively used for providing rubber dampers. The structure of the second embodiment reduces the axial size of the power transmission mechanism PT compared to the first embodiment.

(6) The hub 42B of the torque receiving member 42 prevents the rollers 46 from falling off the receptacles 45. Therefore, there is no need for providing an additional member for preventing the rollers 46 from falling, such as the lid 47 in the first embodiment. This reduces the number of the parts and thus reduces the costs.

A third embodiment of the present invention will now be described. The third embodiment is the same as the second embodiment except for the structures of the receptacles and the rollers and the location of the rubber dampers. Mainly, the differences from the second embodiment will be discussed below, and same or like reference numerals are given to parts that are the same as or like corresponding parts of the second embodiment.

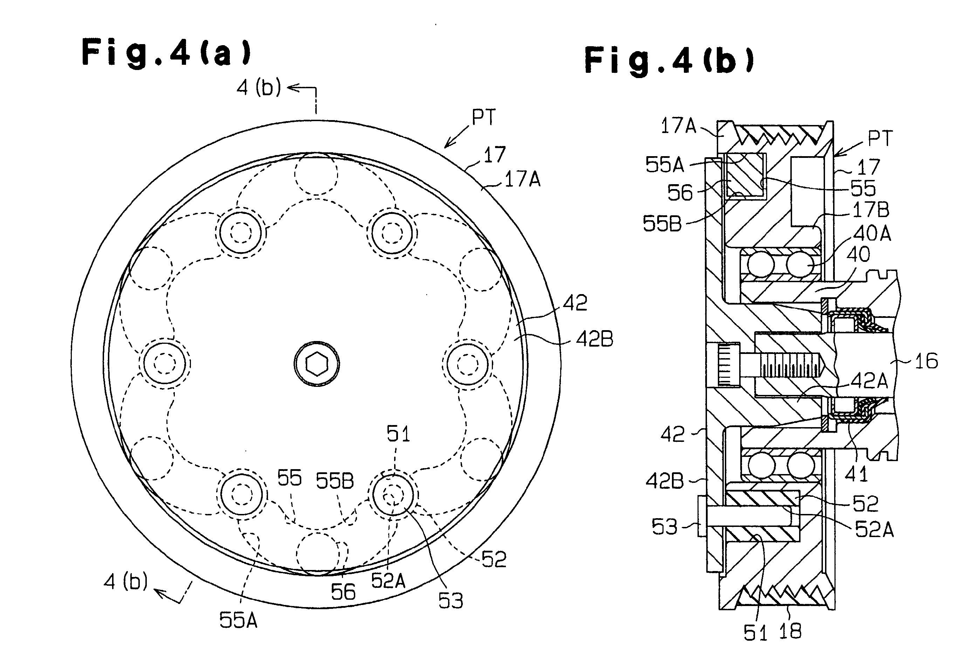

As shown in Figs. 4(a) and 4(b), the power transmission mechanism PT of the third embodiment has six receiving portions, which are weight receptacles 55. An arcuate weight guiding surface 55A is formed in each receptacle 55. Each guiding surface 55A is a part of an imaginary cylinder the radius of which is larger than the radius $r_1$ of the guiding surface 45A in the second embodiment.

An auxiliary guiding surface 55B is formed in each weight receptacle 55. The auxiliary guiding surface 55B is separated from the guiding surface 55A toward the axis of the pulley 17 by a predetermined distance and has an arcuate cross-section. As viewed from the front side of the compressor C, each weight receptacle 55 appears as an arc having a constant width with its middle portion located closer to the periphery of the pulley 17 than its ends. Also, as viewed from the front side of the compressor C, each weight receptacle 55 is symmetrical with respect to an imaginary line that contains the rotation axis of the pulley 17 and the center of the corresponding imaginary cylinder.

A weight, which is a rigid roller 56 in this embodiment, is accommodated in each weight receptacle 55. The diameter of each roller 56 is slightly less than the distance between the guiding surfaces 55A and the auxiliary guiding surface 55B. The axial dimension of the rollers 56 is slightly less than the depth of the receptacles 55, or the dimension along the axis of the pulley 17. That is, each roller 56 can move along, or can swing like a pendulum in, the guiding surface 55A of the corresponding receptacle 55.

The rubber dampers 52 is located in the power transmission path between the pulley 17 and the torque receiving member 42. Also, each adjacent pair of the dampers 52 are located at the ends of the pendulum motion of one of the rollers 56, or at the ends of the corresponding receptacle 55. Part of each rubber damper 52 is exposed in the corresponding receptacles 55. The rubber dampers 52 and the receptacles 55 form receiving portions. When the rollers 56 are moved by an excessive degree, the rollers 56 contact the rubber dampers 52. That is, the rubber dampers 52 attenuate the torque fluctuation transmitted from the torque receiving member 42 to the pulley 17 and function as shock absorbing members for absorbing the shock due to collision of each roller 56 with the corresponding receiving portion.

Each rubber damper 52 is located between an adjacent pair of the receptacles 55. The outer surface of each damper 52 is exposed in the corresponding receptacles 55. That is, each damper 52 can contact the rollers 56 in the corresponding pair of the receptacles 55.

The pulley 17 (the weight receptacles 55), the rubber dampers 52, and the rollers 56 form a dynamic damper.

In addition to the advantages (1) to (6), the third embodiment has the following advantages.

(7) The rubber dampers 52 are located at the ends of the pendulum motion of each roller 56 in the receiving portions. Therefore, when each roller 56 is moved by an excessive degree, the shock due to the collision of the roller 56 and the corresponding receiving portion is absorbed. This prevents the receiving portion and the roller 56 from being deformed or broken and suppresses noise.

(8) The rubber dampers 52 attenuate the torque fluctuation transmitted from the torque receiving member 42 to the pulley 17 and function as shock absorbing members for absorbing the shock due to collision of each roller 56 with the corresponding receiving portion. This structure facilitates creating of the spaces for the shock absorbing members and the damping members and reduces the number of the parts, which reduces the costs.

(9) The shock absorbing member (each shock absorbing damper 52) is used for an adjacent pair of the receiving portions. This structure facilitates creating of the spaces for the shock absorbing member (52) and reduces the number of the parts, which reduces the costs.

It should be apparent to those skilled in the art that the present invention may be embodied in many other specific forms without departing from the spirit or scope of the invention. Particularly, it should be understood that the invention may be embodied in the following forms.

A dynamic damper having weights that swing like pendulums may be provided in the torque receiving member 42 instead of the pulley 17. Alternatively, both of the pulley 17 and the torque receiving member 42 may have the dynamic damper.

In the illustrated embodiments, spherical weights may be used.

In the illustrated embodiments, the number of weight receptacles 45, in which the rollers 46 are provided, may be changed. The number of the recesses need not correspond to the cylinder bores of the compressor C.

In the illustrated embodiments, the cross-sectional shape of each receptacle 45 along a plane perpendicular to the rotation axis of the pulley 17 may be circular. This facilitates machining of the receptacles 45.

In the illustrated embodiments, the square root of the ratio R/r is equal to N, which is the value of n · N when the n is one. However, the square root of the ratio R/r may be the value of n · N when n is a natural number that is equal to or more than two (for example, two or three).

In the illustrated embodiments, the ratio R/r, or the square root of the ratio R/r, of the weights (rollers) may be different. In this case, since there are two or more values that correspond to the ratios R/r, two or more peaks of the torque fluctuations are suppressed.

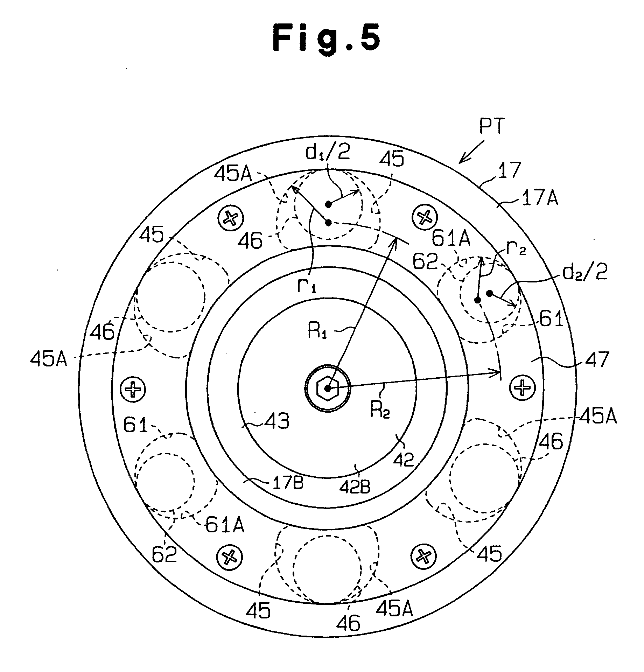

In this case, the values of n are preferably selected from numbers in order from one. For example, when three numbers are selected, one, two and three are preferably used. Accordingly, the square roots of the ratios R/r correspond to the numbers represented by the products n·N, in which n is one, two and three. Therefore, the two or more greatest peaks of the torque fluctuation are suppressed. That is, the resonance is effectively suppressed. Fig. 5 illustrates a power transmission mechanism PT having a pulley 17 according to another embodiment. The pulley 17 has a dynamic damper having two values of the ratio R/r. Specifically, two receptacles 61 and four receptacles 45 are formed in the pulley 17. The cross-section of the receptacles 61 along a plane perpendicular to the axis of the pulley 17 is different from that of the receptacles 45. The weight guiding surface 61A of each receptacle 61 forms a part of an imaginary cylinder, the axis of which is parallel to the rotation axis of the pulley 17. The radius of the imaginary cylinder is represented by $r_2$, and the axis of the imaginary cylinder is spaced from the rotation axis of the pulley 17 by a distance $R_2$. The values of $R_2$ and $r_2$ and the diameter $d_2$ of a roller 62 accommodated in each receptacle 61 are determined such that the value corresponding to the ratio R/r is different between the receptacle 61 and the receptacles 45.

In the illustrated embodiments, the weight guiding surface 45A is formed in each of the weight receptacle 45 in the pulley 17, and each roller 46 swings like a pendulum along the corresponding guiding surface 45A. However, the pulley may have weights each of which is coupled to a fulcrum pin fixed to the pulley and swings like a pendulum. Alternatively, each weight may have a fulcrum pin, which is engaged with a hole formed in the pulley. In this case, each weight swings like a pendulum about the pin.

In the illustrated embodiments, the settings are determined by regarding each weight as a particle at the center of gravity. However, the settings are preferably determined by taking the inertial mass of each weight into consideration. For example, in the case of the cylindrical rollers 46, the settings are preferably made based on the ratio 2R/3r instead on the ratio R/r to take the inertial mass into consideration. When the frequency of the peak of the torque fluctuation is equal to the characteristic frequency of the rollers 46, the torque T is represented by the following equation.

$$\text{(Equation 2)} \qquad T = (3/2) \cdot m \cdot (\omega_a)^2 \cdot (R+r) \cdot R \cdot \varphi$$

If spherical weights are used, the settings are preferably made based on the ratio 5R/7r to take the inertial mass into consideration. When the frequency of a peak of the torque fluctuation is equal to the characteristic frequency of each spherical weight, the torque T is represented by the following equation.

(Equation 3)　　　$T = (7/5) \cdot m \cdot (\omega_a)^2 \cdot (R+r) \cdot R \cdot \varphi$

If the weights are not formed cylindrical or spherical, the settings are preferably made by taking the inertial mass of the weights into consideration so that the resonance is effectively suppressed.

In the second embodiment, each power transmission pin 53 may be coupled to the hub 42B with a tubular rubber damper. In other words, the power transmission pins 53 may be coupled to both of the hub 42B and the pulley 17 with damping members such as rubber dampers.

In the second embodiment, each power transmission pin 53 is fixed to the hub 42B and coupled to the pulley 17 with the corresponding rubber damper 52. However, the pins 53 may be fixed to the pulley 17 and coupled to the hub 42B with rubber dampers.

In the second embodiment, the rubber dampers 52 are tubular and have circular cross-section. However, the cross-section of the rubber dampers 52 may be changed.

In the second embodiment, a space may exist between the inner surface of each receptacle 51 and the corresponding rubber damper 52 or between the inner surface of each rubber damper 52 and the outer surface of the corresponding power transmission pin 53. That is, narrow spaces may exist as long as the power transmitting performance and the durability of the power transmission mechanism PT are not adversely affected.

In the illustrated embodiments, the rubber dampers (43, 52) are used. However, dampers made of elastomer may be used.

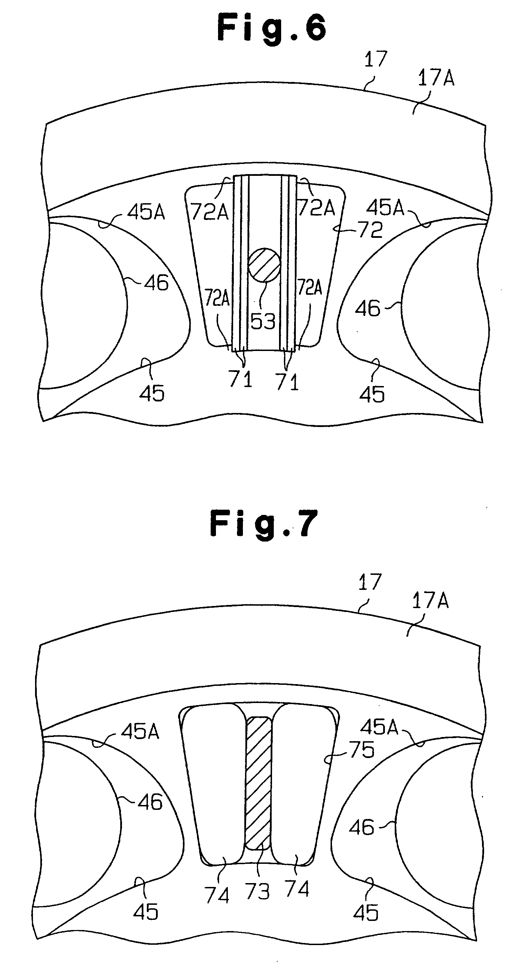

In the illustrated embodiment, rubber dampers (43, 52) are used as damping members. However, the pulley 17 may be coupled to the torque receiving member 42 by springs (damping members (elastic members)) such as metal springs. Fig. 6 describes such an embodiment. In the embodiment of Fig. 6, the rubber dampers 52 of the second embodiment are replaced with leaf springs 71. The leaf springs 71 transmit power from the pulley 17 to the power transmission pins 53. In Fig. 6, the hub 42B is omitted for purposes of illustration. In the structure of Fig. 6, a spring receptacle 72 is formed between each adjacent pair of the weight receptacles 45. A plurality of leaf springs 71 are located in each spring receptacle 72. The rear portion of each power transmission pin 53 is inserted in one of the spring receptacle 72. In each spring receptacle 72, two of the rectangular springs 71 are laminated and located at each side of the power transmission pin 53 in the circumferential direction of the pulley 17. The ends of the springs 71 (the ends in the radial direction of the pulley 17) are engaged with steps 72A formed in the inner wall of the spring receptacle 72, which prevents the power transmission pin 53 from moving toward the opposite side in the circumferential direction. The middle portions of the springs 71 are elastically deformed by the power transmission pin 53, which absorbs the torque fluctuation transmitted from the torque receiving member 42 to the pulley 17. The friction between the laminated springs 71 attenuates the torque fluctuation. The rotation axes of the pulley 17 and the torque receiving member 42 may be displaced from each other. However, deformation of the springs 71 and the changes of the contact point between the springs 71 and the pins 53 reduce stress applied to the radial bearings 12A, 40A due to the displacement of the axes.

In the illustrated embodiments, rubber dampers (43, 52) are used as damping members. However, the pulley 17 may be coupled to the torque receiving member 42 by damping members having gel containers. Fig. 7 describes such an embodiment. In the embodiment of Fig. 7, the power transmission pins 53 of the second embodiment, which are located between the pulley 17 and the hub 42B, are replaced with power transmission projections 73 and containers 74. The power transmission projections 73 project rearward from the hub 42B. The pulley 17 is coupled to the torque receiving member 42 by the projections 73 and the containers 74. In Fig. 7, the hub 42B is omitted for purposes of illustration. In the structure of Fig. 7, a container receptacle 75 is formed between each adjacent pair of the weight receptacles 45. A plurality of containers 74 are located in each container receptacle 75. The cross-section of each power transmission projection 73 along a plane perpendicular to the rotation axis of the torque receiving member 42 is substantially rectangular. The rear portion of each projection 73 is inserted in the corresponding container recess 75. In each container receptacle 75, a container 74 is located at each side of the projection 73 in the circumferential direction of the pulley 17. Each container 74 includes a bag-like member and gel, which is included in the bag-like member. In this structure, gel sealed in the gel containers 74 attenuates the torque fluctuation transmitted from the torque receiving member 42 to the pulley 17 through the projections 73. The rotation axes of the pulley 17 and the torque receiving member 42 may be displaced from each other due to errors. However, deformation of the gel containers 74 reduces stress applied to the radial bearings 12A, 40A due to the displacement of the axes. Instead of the gel containers, containers having fluid such as liquid or gas may be used as damping members. If fluid is used, the same advantages as the case where gel is used are achieved. However, gel attenuates vibration by a greater degree compared to fluid.

The number of cylinder bores 24 in the compressor C may be changed. A typical compressor for a vehicular air conditioner has three to seven cylinder bores. If the number of the cylinder bores 24 is three, the fluctuation of torque transmitted between the pulley 17 and the torque receiving member 42 due to rotational vibration produced in the drive shaft 16 is greater compared to a case where the number of the cylinders 24 is four or greater. That is, in a rotary machine that has three cylinder bores, the dynamic dampers and the damping members of the illustrated embodiment effectively suppress resonance.

In the third embodiment, each shock absorbing members (52) need not be used for an adjacent pair of the guides. Each shock absorbing members may correspond to one of the guides.

In the third embodiment, the rubber dampers 52 attenuate the torque fluctuation transmitted from the torque receiving member 42 to the pulley 17 and also function as shock absorbing members for absorbing the shock due to collision of each roller 56 with the corresponding receiving portion. However, the damping members may be provided separately from the shock absorbing members.

In the illustrated embodiments, the shock absorbing members for damping shock due to collision between the guides and the weights may be provided at a position other than the ends of pendulum motion of each weight. For example, the shock absorbing members may be provided on any surface forming each receptacle (45, 55, 61). In the first embodiment, the shock absorbing members may be provided on a side of the lid 47 that faces the receptacles. In the second and third embodiments, the shock absorbing members may be located on a side of the hub 42B that faces the receptacles. In these cases, rubber sheets or elastic coating may be used as the shock absorbing members. The shock absorbing members dampen the shock due to collision between the weights and the guides. The weights collide with the guiding surface (45A, 55A, 61A) of the receptacles when, for example, the pulley 17 suddenly starts rotating at a high speed. When the rotation speed of the pulley 17 is decreased while the weight contacts and is swinging like a pendulum along the guiding surface, the weight is separated from the guiding surface. At this time, the weight collides with the radially inner surface of the receptacle (for example, the auxiliary guiding surface 55B).

In the illustrated embodiment, the power transmission mechanism PT is used for the compressor C, which has the single headed pistons 25. However, the mechanism PT may be used for a compressor that has double-headed pistons. In this type of compressor, cylinder bores are formed on either side of a crank chamber and each piston compresses gas in one of the pairs of the cylinder bores.

In the illustrated embodiment, the cam plate (the swash plate 20) rotates integrally with the drive shaft 16.
However, the pulley 17 may be used in a compressor, in which a cam plate rotates relative to a drive shaft. For example, the pulley 17 may be used in a wobble type compressor.

The pulley 17 may be used in a fixed displacement type compressor, in which the stroke of the pistons are not variable.

In the illustrated embodiments, the present invention is applied to a reciprocal piston type compressor. However, the present invention may be applied to rotary compressors such as a scroll type compressor.

In the illustrated embodiment, the second rotor is the pulley 17. However, a sprocket or a gear may be used as the first rotor.

In the illustrated embodiments, the present invention is applied to the compressor C. However, the present invention may be applied to any apparatus that has a rotary shaft coupled to the power transmission mechanism PT, and torsional vibration is produced in the rotary shaft.

The axis of the pendulum motion of each weight need not be parallel to the rotation axis of the rotor in which the weights are located. Specifically, the axis of the pendulum motion may be inclined relative to the rotation axis of the rotor in a range in which the maximum torque fluctuation is suppressed by a desirable degree.

Therefore, the present examples and embodiments are to be considered as illustrative and not restrictive and the invention is not to be limited to the details given herein, but may be modified within the scope and equivalence of the appended claims.

A torque receiving member (42) is fixed to a rotary shaft (16) of a compressor. A pulley (17), which is rotated by an external drive source (E), is rotatably supported by a housing (11, 12, 13, 14) of the compressor. The pulley (17) is substantially coaxial with the torque receiving member (42). A rubber damper (43) is located between the pulley (17) and the torque receiving member (42). The rubber damper (43) absorbs rotational vibration transmitted from the torque receiving member (42) to the pulley (17). The pulley (17) has a dynamic damper. The dynamic damper includes rollers (46), which swing like pendulums to reduce rotational vibration of the pulley (17). Stress produced due to displacement between the axis of the pulley (17) and the torque receiving member (42) is reduced by the rubber damper (43).

## Claims

1. A rotary machine driven by an external drive source (E), **characterized by**:

   a housing (11, 12, 13, 14);
   a rotary shaft (16) rotatably supported by the housing (11, 12, 13, 14);
   a first rotor (42) fixed to the rotary shaft (16) to rotate integrally with the rotary shaft (16);
   a second rotor (17) rotatably supported by the housing (11, 12, 13, 14), wherein the second rotor (17) is substantially coaxial with the first rotor (42) and is rotated by the external drive source (E);
   a coupling member coupling the rotors (17, 42) to each other to transmit power from the second rotor (17) to the first rotor (42), wherein the coupling member includes a damping member (43, 52, 71, 74); and

a dynamic damper provided in at least one of the rotors (17, 42), wherein the dynamic damper has a weight (46, 56, 62) that swings like a pendulum, wherein the axis of the pendulum motion of the weight (46, 56, 62) is separated by a predetermined distance from and is substantially parallel to the rotation axis of the corresponding rotor.

2. The rotary machine according to claim 1, **characterized in that** the damping member (43, 52, 71, 74) is deformed to allow the second rotor (17) to move relative to the first rotor (42) .

3. The rotary machine according to claim 1 or 2, **characterized in that** the damping member is an elastic member (43, 52, 71).

4. The rotary machine according to claim 1 or 2, wherein the damping member is a spring (71).

5. The rotary machine according to claim 1 or 2, **characterized in that** the damping member is a sealed container (74) containing fluid.

6. The rotary machine according to claim 1 or 2, **characterized in that** the damping member is a sealed container (74) containing gel.

7. The rotary machine according to claim 1 or 2, wherein the coupling member includes a transmission pin (53), and wherein the damping member (52) is tubular and is located about the transmission pin (53).

8. The rotary machine according to any one of claims 1 to 7, **characterized in that** the damping member (52, 71, 74) is one of a plurality of damping members, which are arranged about the axis of the rotary shaft (16) at equal angular intervals.

9. The rotary machine according to any one of claims 1 to 8, **characterized in that** the weight (46, 56, 62) is one of a plurality of weights, wherein the weights (46, 56, 62) are arranged or constructed to suppress a plurality of order components in rotational vibration generated in the corresponding rotor.

10. The rotary machine according to any one of claims 1 to 7, **characterized in that** the rotor having the weight (46, 56, 62) has a receiving portion (45, 55 61) for receiving the weight (46, 56, 62), wherein the receiving portion (45, 55 61) has an arcuate guising surface (45A, 55A, 61A), along which the weight (46, 56, 62) swings like a pendulum.

11. The rotary machine according to claim 10, **characterized by** a shock absorbing member (52) for absorbing shock produced by collision between the receiving portion (55) and the weight (56).

12. The rotary machine according to claim 11, **characterized in that** the shock absorbing member (52) is one of a pair of shock absorbing members, which are located at the ends of the pendulum motion of the weight (56).

13. The rotary machine according to claim 11 or 12, **characterized in that** the shock absorbing member (52) also functions as the damping member.

14. The rotary machine according to any one of claims 11 to 13, **characterized in that** the weight (56) is one of a plurality of weights, and the receiving portion (55) is one of a plurality of receiving portions, each of which corresponds to one of the weights (56), and wherein the shock absorbing member (52) absorbs shock produced in at least two of the receiving portions (55).

15. The rotary machine according to claim 14, **characterized in that** the receiving portions (55) are arranged about the rotation axis of the corresponding rotor at equal angular intervals, wherein the shock absorbing member (52) is one of a plurality of shock absorbing members, and wherein each shock absorbing member (52) is located between an adjacent pair of the receiving portions (55) to absorb shock produced in the pair of the receiving portions (55).

16. The rotary machine according to any one of claims 1 to 15, **characterized by** a compression mechanism, which is driven by rotation of the rotary shaft (16).

17. The rotary machine according to claim 16, **characterized in that** the compression mechanism is a piston type compression mechanism, which compresses and discharges fluid by reciprocation of a piston (25).

18. The rotary machine according to claim 17, **characterized in that** the housing (11, 12, 13, 14) has a plurality of cylinder bores (24) formed about the axis of the rotary shaft (16), and the piston (25) is one of a plurality of pistons, each of which is accommodated in one of the cylinder bores, and wherein the number of the cylinder bores is three, four, five, six or seven.

19. The rotary machine according to claim 18, **charac-**

**terized in that** the number of the cylinder bores (24) is three.

20. The rotary machine according to any one of claims 17 to 19, **characterized in that** the compression mechanism varies the displacement per rotation of the rotary shaft (16).

# Fig.1

EP 1 270 940 A2

# Fig.2(a)

# Fig.2(b)

EP 1 270 940 A2

Fig.3(a)

Fig.3(b)

# Fig.4(a)

# Fig.4(b)

EP 1 270 940 A2

# Fig.5

# Fig.6

# Fig.7